# EUROPEAN PATENT APPLICATION

(11) **EP 4 621 037 A1**
(43) Date of publication of application: **24.09.2025**
(21) Application number: 24165501.8
(22) Date of filing: 22.03.2024
(51) Int. Cl.: C12C 7/22, C12C 7/26, C12C 13/02

(54) **HIGH TEMPERATURE WORT BOILING SYSTEM AND METHOD**

(71) Applicant: Alfa Laval Corporate AB, 221 00 Lund (SE)
(72) Inventor: MARTIN, Denis, DK-2610 RØDOVRE (DK)
(74) Representative: Alfa Laval Attorneys

(57) **Abstract**

The present invention relates to an energy efficient continuous wort boiling process and system, comprising: a feeding pump for feeding incoming wort via a feed line, a heat exchanger being fluidly connected to the feed line and arranged to heat the incoming wort, a holding cell, into which the heated wort is fed and held pressurized for a specified time period at a determined pressure and temperature, which is below a boiling point of the wort at the determined pressure, wherein the wort is held pressurized by means of the pressure generated by the feeding pump, and wherein the heat exchanger is arranged to receive the heated wort from the holding cell, the heat exchanger arranged such that the heated wort pre-heats the incoming wort to a target temperature, and the incoming wort cools the outgoing heated wort.

## Description

### TECHNICAL FIELD

The present disclosure relates to the field of brewing and more specifically to wort boiling technology. More specifically, the present disclosure relates to a process for continuous wort boiling in a beer brewing process and to a continuous wort boiling system, as further defined in the preamble of appended claims.

### BACKGROUND

Wort boiling is an energy-demanding operation in brewing and can account for around 40% of the total energy use in the brewery. Wort boiling is traditionally done by boiling in batch under atmospheric pressure for around 70 minutes. Energy recovery systems can be used to condense the generated vapors to recover energy.

Three of the main process goals of the wort boiling are to isomerize hop substances, coagulate proteins and to eliminate off-flavors. Especially, S-methyl methionine (SMM) is converted to dimethyl sulfide (DMS) that is then being removed via vapors during evaporation. In the processes for wort boiling known in the prior art, evaporation of undesirable substances, in particular free DMS, is therefore aimed at even during wort boiling. For this purpose, the free DMS present in the wort is evaporated and expelled in the wort kettle with rest of the vapors generated by the boiling process. The boiling system may be for example an internal or external boiler. Another example of removal is use of flash evaporation with a high temperature boiling system.

During the removal of hot trub, for example by means of a Whirlpool, new free DMS can be formed due to the relatively high residual temperature of the wort in the range of > 80°C and the presence of SMM, which is traditionally not expelled again, if a Whirlpool is used for removing the hot trub. In the prior art, systems are known which provide evaporation by expansion into a vacuum, a stripping process, optionally supported by gas streams which are preferably conducted in opposite directions, or via an evaporation process.

High temperature wort boiling is a known technique in the field. The principle is to bring wort under pressure in a holding cell to about 130-140°C, where the DMS conversion, coagulation of proteins and isomerization processes can take about 2 - 4 minutes. The removal of the DMS in the process is then done by flashing, i.e. releasing the hot wort at 130-140°C in an atmospheric tank, which generates a lot of vapors and therefore strips the DMS. The problem with the above-mentioned technologies is that because of the evaporation process, despite energy recovery system requiring storing of the recovered energy in an external medium such as water, the energy losses are high.

Another method known in the art to lower energy consumption is to keep the wort at 100 degrees without boiling, therefore avoiding the energy use to evaporate. The wort is then stripped in a stripping column with gas, for example CO₂, N₂ or air. Stripping with gas is a very efficient way to remove DMS with low or no energy demand. However, the method requires long time, provides lower isomerization rate and thus different wort quality.

A prior art document DE102014104899A1 discloses a method and device for treating wort in beer production process comprising boiling wort and keeping it hot in a container under overpressure, cooling the wort to a temperature below boiling temperature at normal pressure and evaporating undesired substances from the cooled wort. In the process, thermal energy contained in the wort can be transferred to a heat exchanger by transferring the thermal energy to a cooling medium, in particular a liquid cooling medium, which is correspondingly passed by the heat exchanger. However, the use of cooling medium to convey and store energy requires use of two heat exchangers: one to take the energy from wort to water, and another to convey the energy from water to wort. Therefore, there are energy losses in the total energy recovery. Thus, despite existing solutions to reduce energy consumption in wort boiling, there is still room for improvements.

### SUMMARY OF THE INVENTION

In view of the environmental requirements and global goals for reducing energy consumption in industrial processes, it is an objective with the present invention to provide improved reduction of energy consumption in wort boiling, while still providing high efficiency in the reduction of off-flavors.

Especially, it is an objective of the present invention to keep the advantages and remove the disadvantages of the prior art techniques.

The objectives above are attained by the present invention as defined in the appended claims.

According to a first aspect, the objectives are attained with a process for continuous wort boiling in a beer brewing process defined in the independent claim 1. The process comprises the steps of:
- providing incoming wort into which hops have been added at a temperature of 50 to 90°C, or 60 to 85°C, or 70 to 80°C, or between 72-78°C,
- feeding the incoming wort to a heating step by means of a feeding pump,
- heating the wort to a target temperature of 110-150°C, or about 125-140°C, at a determined pressure, wherein the temperature is below a boiling point of the wort at the determined pressure,
- supplying the heated wort to a holding cell and pressurizing the wort to the determined pressure in the holding cell by means of the feeding pump,
- keeping the heated wort pressurized at the determined pressure and at the target temperature of in the holding cell for about 100s to 600s, or 120 to 300 s, or 150s to 210 s.
- supplying the heated wort from the holding cell back to the heating step, in which the heated wort is arranged to pre-heat the incoming wort, and the incoming wort is arranged to cool the heated wort.

The pre-heating of the incoming wort and the cooling of the outgoing heated wort is arranged as a wort-to-wort heat exchange in the heat exchanger without using an additional heat exchange media. Thus, no separate cooling/heating media is needed.

The claimed process is continuous. The wort is kept pressurized in the holding cell by the feed pump and at a temperature close to but below the boiling point of the wort. Therefore, the quality of the wort can be kept high, while the energy demand is kept low since there is no evaporation through boiling. Thus, there are no energy losses due to the evaporation. As the outgoing heated wort pre-heats the incoming wort, it is possible to reduce steam consumption for the heating. Furthermore, effective cooling of the outgoing heated wort can be obtained in one step. Thus, energy demand can be considerably reduced compared to the prior art solutions.

The incoming wort can be pre-heated by the heated wort from the holding cell to a temperature, which is less than 10°C from a target temperature at the determined pressure. The heating step may additionally comprise heating the incoming wort to the target temperature at the determined pressure by using steam for the heating. However, the use of the steam can be reduced in heating to the target temperature, since the wort has been pre-heated.

The incoming wort may be arranged to cool the heated wort from the holding cell to a temperature being 1-10°C warmer than the temperature of the incoming wort. In this way, no separate cooling media or cooler needs to be used after the heat exchanger.

According to another aspect of the invention, the objectives mentioned above are also attained by a continuous wort boiling system comprising:
- a feeding pump for feeding incoming wort via a feed line,
- a heat exchanger being fluidly connected to the feed line and arranged to heat the incoming wort,
- a holding cell, into which the heated wort is fed and held pressurized for a specified time period at a determined pressure and temperature, which is below a boiling point of the wort at the determined pressure, wherein the wort is held pressurized by means of the pressure generated by the feeding pump, and wherein
- the heat exchanger is arranged to receive the heated wort from the holding cell, the heat exchanger arranged such that the heated wort pre-heats the incoming wort to a target temperature, and the incoming wort cools the outgoing heated wort.

The pre-heating of the incoming wort and the cooling of the outgoing heated wort may be arranged as a wort-to-wort heat exchange in the heat exchanger without using an additional heat exchange media. In this way the system can be made compact, and a very high energy recovery rate can be obtained.

The heat exchanger may be fluidly connected to a steam generator arranged to additionally heat the pre-heated wort to the target temperature at a determined pressure. Since the wort is pre-heated, the amount of steam required for the heating can be considerably reduced, whereby further energy savings are achieved.

The heat exchanger mat be a plate heat exchanger. By the plate heat exchanger, a very high energy recovery rate can be obtained. The heat exchanger may comprise a first section arranged to pre-heat the incoming wort and cool the heated wort. The heat exchanger may comprise a second section, which is fluidly connected to the steam generator arranged to additionally heat the pre-heated wort to the target temperature at the determined pressure. In this way the wort flows can be arranged inside the heat exchanger in an efficient manner.

The system may further comprise an atmospheric whirlpool tank, in which coagulated proteins are separated. The system further may also comprise a stripping column fed with air, CO₂ or N₂ for the removal of DMS. The atmospheric whirlpool tank can be located upstream or downstream of the stripping column. The whirlpool and the stripping column may be arranged to receive the wort in a continuous manner.

### SHORT DESCRIPTION OF DRAWINGS

Reference is made to the following drawings, in which the invention is further described. In the drawings:

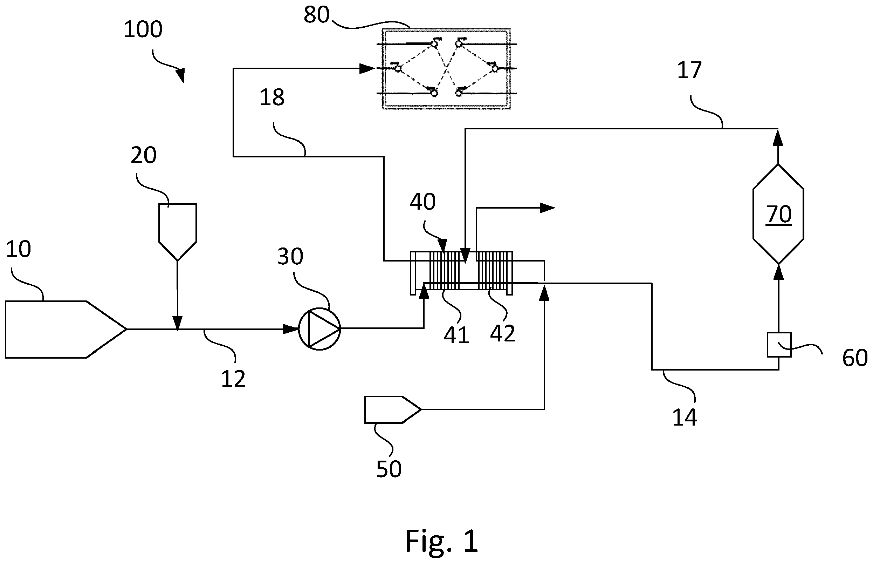

Fig. 1 shows schematically an example flow scheme of the heat recovery part of the present invention.

### DETAILED DESCRIPTION

Reference is made to the appended drawings, and to Fig. 1, which shows a system suitable for providing the continuous wort treatment process with energy recovery in a beer brewing process according to the present invention.

Wort can be provided in a manner known to a skilled person. It can be provided by a process including crushing and mashing barley with water. The wort is then boiled to achieve desired taste properties. During wort boiling bitter hops substances are dissolved and isomerized, proteins precipitated, and aroma and color components formed. Additionally, microorganisms and enzymes can be inactivated. However, as described above, the boiling process may also form undesirable aroma substances. These undesirable substances need to be therefore expelled or removed from the wort during and/or after boiling of the wort. The proportion of free dimethyl sulfide (DMS) is generally used as a reference for successful expulsion of undesirable substances from the wort in beer production. 100 µg per liter is usually regarded as a recognized limit value for an acceptable proportion of free DMS in final beer. As explained above, the wort boiling to evaporate off-flavors demands a lot of energy. By the present invention the energy consumption can be significantly reduced while minimum number of changes to existing brewery processes is required.

In the beer brewing system 100 according to the present invention shown in Fig. 1, the wort 10 can be provided according to a manner known to a skilled person in the field. The incoming wort 10 is supplied to the continuous wort treatment system via a feed line 12 and hops 20 can be added to the wort in the feedline 12 upstream of a heating step. The wort may be relatively clear, and the hops may be added as an extract. The wort 10 including the hops 20 is then pumped by means of a low-pressure pump 30 to a heating step. The low-pressure pump may be of any suitable type and may be operating at a pressure level of for example up to 10 bar gauge pressure. The incoming wort before heating the heating step may have a temperature of about 50 to 90°C, or 60 to 85°C, or 70 to 80°C. Suitably the temperature can be between 72 and 78°C. In the heating step, a heat exchanger 40 is utilized. The heat exchanger 40 may be a plate heat exchanger, suitably a gasketed plate heat exchanger. The heat exchanger 40 may comprise a first section 41 and a second section 42. The incoming wort can be guided through both sections and heated to a target temperature of 110-150°C, or about 125-140°C at a determined pressure. The temperature can be chosen to be below a boiling point of the wort at the determined pressure. After heating the wort to the target temperature, the wort is fed via a fluid line 14 to a holding cell 70, where it is kept pressurized. Upstream of the holding cell 70, a static mixer 60 can be provided. This creates turbulences with the flow passing through. Additionally, or alternatively, one or more static mixers can be installed in the holding cell to provide turbulence at different holding times.

The wort is pressurized in the in the holding cell 70 by means of the feeding pump 30, which continuously pumps the wort in the process. Therefore, there is no need to utilize any pressurizing medium, such as an inert gas in the holding cell. There is therefore also no need to first fill the holding cell, then fill an inert gas and then empty the holding cell. Instead, the feeding pump keeps the pressure constant in the holding cell in a continuous process. Therefore, in the present system the size of the holding cell can be minimized. For example, in a batch process, in which a batch is 100hl a vessel to accumulate the wort must have a volume of 100hl. In the present process, with a flow rate of 100 hl/hour, the size of the vessel can be much smaller, such as a 5-7hl vessel in the holding cell to treat the same volume in one hour. Depending on the flow rates in the process, the wort is kept in the holding cell for 100 to 600 seconds (s), or 120 to 300 s, or 150 to 210 s. The holding cell volumes are adapted to the flow rates, and as a further example may be for example 20-200 liters for flow rates of 1-4 m³/h. However, in bigger brewing plants, the flow rates may be much higher, and the volume of the holding cell is adapted accordingly.

To minimize the energy consumption according to the present invention, the heated wort 17 from the holding cell 70 is fed back to the heating step, in which the heated wort is arranged to pre-heat the incoming wort via wort-to-wort heat exchange. In the shown example in Fig. 1, the heated wort 17 is supplied to the first heat exchange section 41, where the wort-to-wort heat exchange occurs. That is, the incoming wort 12 is heated with the outgoing heated wort 17, while the incoming wort 12 cools the outgoing heated wort 17 in the heat exchanger. The outgoing cooled wort 18 downstream of the cooling step may reach a temperature of from about 50-80°C depending on the temperature of the incoming wort 12. The present process and system do not utilize a cooling media. The heat exchange is a wort-to-wort, or liquid-to-liquid, heat exchange originating from the same batch, suppressing the need of doing more than one batch to recover the energy. Since there is no need for a cooling media, there is no need for an additional heat exchanger which would take the energy from wort to the cooling media and then from the cooling media to the wort. Even if each heat exchanger had a high energy recovery rate, such as 95%, the total recovery would be only 90% due to the losses from 2 different medias and heat exchangers. Thus, thanks to the wort-to-wort heat-exchange between the incoming and outgoing wort, a very high energy recovery rate, for example 95%, can be reached by the present invention.

The cooled wort 18, which may have a temperature of about 76-78°C is supplied via a valve arrangement or swing bend panel to an atmospheric tank (not shown), for example a whirlpool tank to separate the coagulated proteins. After the separation of the coagulated proteins the wort is then sent to a stripping column fed with air, CO2 or N2, where the DMS can be removed. The stripped wort can then further be cooled down to a fermentation temperature, and the brewing process may continue in the known way.

The above detailed description explains the invention by way of example. The scope of the invention is defined in the appended claims.

## Claims

1. Process for continuous wort boiling in a beer brewing process, comprising the steps of:
- providing incoming wort into which hops have been added at a temperature of 50 to 90°C, or 60 to 85°C, or 70 to 80°C, or between 72-78°C,
- feeding the incoming wort to a heating step by means of a feeding pump,
- heating the wort to a target temperature of 110-150°C, or about 125-140°C, at a determined pressure, wherein the temperature is below a boiling point of the wort at the determined pressure,
- supplying the heated wort to a holding cell and pressurizing the wort to the determined pressure in the holding cell by means of the feeding pump,
- keeping the heated wort pressurized at the determined pressure and at the target temperature in the holding cell for about 100s to 600s, or 120 to 300 s, or 150s to 210 s.
- supplying the heated wort from the holding cell back to the heating step, in which the heated wort is arranged to pre-heat the incoming wort, and the incoming wort is arranged to cool the heated wort.

2. Process according to claim 1, wherein the pre-heating of the incoming wort and the cooling of the outgoing heated wort is arranged as a wort-to-wort heat exchange in the heat exchanger without using an additional heat exchange media.

3. Process according to claim 1 or 2, wherein the incoming wort is pre-heated by the heated wort from the holding cell to a temperature, which is less than 10°C from a target temperature at a determined pressure.

4. Process according to claim 3, wherein the heating step comprises additionally heating the incoming wort to the target temperature at the determined pressure by using steam for the heating.

5. Process according to any of the preceding claims, wherein the incoming wort is arranged to cool the heated wort from the holding cell to a temperature being 1 -10°C warmer than the temperature of the incoming wort.

6. Continuous wort boiling system, comprising:
- a feeding pump for feeding incoming wort via a feed line,
- a heat exchanger being fluidly connected to the feed line and arranged to heat the incoming wort,
- a holding cell, into which the heated wort is fed and held pressurized for a specified time period at a determined pressure and temperature, which is below a boiling point of the wort at the determined pressure, wherein the wort is held pressurized by means of the pressure generated by the feeding pump, and wherein
- the heat exchanger is arranged to receive the heated wort from the holding cell, the heat exchanger arranged such that the heated wort pre-heats the incoming wort to a target temperature, and the incoming wort cools the outgoing heated wort.

7. The continuous wort boiling system of claim 6, wherein the pre-heating of the incoming wort and the cooling of the outgoing heated wort is arranged as a wort-to-wort heat exchange in the heat exchanger without using an additional heat exchange media.

8. The continuous wort boiling system of claim 6 or 7, wherein the heat exchanger is fluidly connected to a steam generator arranged to additionally heat the pre-heated wort to the target temperature at a determined pressure.

9. The continuous wort boiling system of any one of claims 6-8, wherein the heat exchanger is a plate heat exchanger.

10. The continuous wort boiling system of claim 9, wherein the heat exchanger comprises a first section arranged to pre-heat the incoming wort and cool the heated wort.

11. The continuous wort boiling system of claim 9 or 10, wherein the heat exchanger comprises a second section, which is fluidly connected to the steam generator arranged to additionally heat the pre-heated wort to the target temperature at the determined pressure.

12. The continuous wort boiling system of any one of claims 6 to 11, wherein the system further comprises an atmospheric whirlpool tank, in which coagulated proteins are separated.

13. The continuous wort boiling system of claim 12, wherein the system further comprises a stripping column fed with air, CO₂ or N₂ for the removal of DMS.

14. The continuous wort boiling system of claim 13, wherein the atmospheric whirlpool tank is located upstream of the stripping column.

15. The continuous wort boiling system of claim 13, wherein the atmospheric whirlpool tank is located downstream of the stripping column.
